# DEMANDE DE BREVET EUROPEEN

(11) **EP 1 072 864 A1**
(43) Date de publication de la demande: **31.01.2001**
(21) Numéro de dépôt: 00402130.9
(22) Date de dépôt: 25.07.2000
(51) Int. Cl.: G01C 21/36, G09B 29/10, G06F 3/033

(54) **Système de navigation**

(30) Priorité: 26.07.1999 FR 9909682
(71) Demandeur: MLR ELECTRONIQUE, F-44330 Vallet (FR)
(72) Inventeur: Lebreton, Marc Paul Marie, 44330 Le Pallet (FR)
(74) Mandataire: Berger, Helmut

(57) **Abrégé**

L'invention est du type comprenant un appareil de navigation et de positionnement pourvu d'une base de données géographiques et un dispositif (1) de saisie de points géographiques sur une carte géographique ou analogue, par un utilisateur et d'inscription des données dans ladite base. Le système est caractérisé en ce que le dispositif (1) de saisie des coordonnées de points géographiques à inscrire comporte une dalle tactile transparente susceptible d'être posée sur la carte et adaptée pour permettre d'indiquer un point sur cette dernière à travers la dalle, des moyens d'établissement et de corrélation entre les coordonnées des points de la dalle et des données géographiques des points correspondants sur la carte et des moyens de transformation des données d'un point saisi de la dalle en données géographiques correspondantes.

## Description

L'invention concerne un système de navigation et de positionnement dans une zone géographique prédéterminée, du type comprenant un appareil de navigation et de positionnement pourvu d'une base de données géographiques des lieux géographiques situés dans ladite zone géographique prédéterminée et un dispositif de saisie de données géographiques sur la carte géographique ou analogue, de cette zone par un utilisateur et d'inscription des données dans ladite base, ainsi qu'un procédé de mise en oeuvre d'un tel système.

Dans les systèmes connus de ce type le dispositif de saisie de données géographiques comporte un élément mécanique mobile que l'utilisateur doit placer sur les points à saisir.

La présente invention a pour but de proposer un système du type indiqué plus haut, pourvu d'un dispositif de saisie de données sans organe mobile.

Pour atteindre ce but, le dispositif de saisie des coordonnées de points géographiques à inscrire dans la base de coordonnées géographique comporte une dalle tactile transparente susceptible d'être posée sur la carte et adaptée pour permettre d'indiquer un point sur cette dernière à travers la dalle, des moyens d'établissement de la corrélation entre les coordonnées des points de la dalle et des données géographiques des points correspondants sur la carte et des moyens de transformation des données d'un point saisie de la dalle en données géographiques correspondantes.

Selon une caractéristique de l'invention, la dalle tactile est reliée à l'appareil de navigation et de positionnement par l'intermédiaire d'un dispositif d'adaptation des formats des protocoles de la dalle et de l'appareil.

Selon encore une autre caractéristique de l'invention, les moyens d'établissement de la corrélation et les moyens de transformation des données font partie de l'appareil de navigation et de positionnement.

Le procédé de mise en oeuvre du système de navigation et de positionnement selon l'invention est caractérisé en ce que l'on prévoit dans l'appareil de navigation et de positionnement un logiciel d'initialisation et d'utilisation de la dalle tactile.

Selon une caractéristique de l'invention, pour l'établissement de la corrélation entre les coordonnées des points de la dalle se trouvant sur la carte géographique et des données géographiques des points correspondant situés sur la carte, l'utilisateur initialise la dalle en saisissant trois points remarquables de la carte, dont le premier et le deuxième se trouvent sur la même latitude et le deuxième et troisième sur la même longitude.

Selon une autre caractéristique de l'invention, la saisie d'un point remarquable pour l'initialisation se fait en inscrivant des données géographiques de ce point dans l'appareil, le cas échéant à l'aide du clavier de l'appareil, et en appuyant sur la dalle tactile à l'emplacement de ce point.

Selon une autre caractéristique de l'invention, après l'initialisation de la dalle, on inscrit les données géographiques d'un point de la carte en appuyant sur la dalle tactile à l'emplacement de ce point.

Selon une autre caractéristique de l'invention, en saisissant successivement plusieurs points l'utilisateur crée une route où réalise un profil de carte.

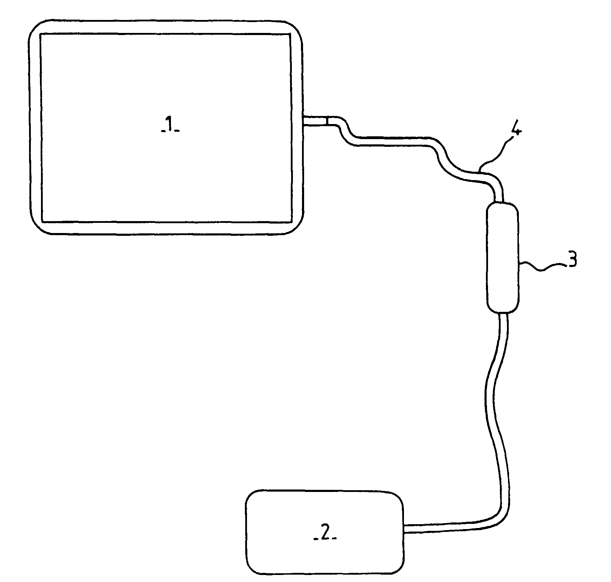

L'invention sera mieux comprise et d'autres buts, caractéristiques, détails et avantages de celle-ci apparaîtront plus clairement dans la description explicative qui va suivre faite en référence au dessin schématique unique donné uniquement à titre d'exemple et illustrant le système de navigation et de positionnement selon l'invention.

Comme on le voit sur la figure, le système selon l'invention comporte un dispositif 1 de saisie des coordonnées géographiques de points à saisir sur une carte géographique ou tout autre support analogue, un appareil de navigation et de positionnement 2, pourvu d'une base de données géographiques des lieux géographiques situés dans une zone géographique prédéterminée et un dispositif électronique 3 disposé dans le câble de liaison 4 reliant le dispositif de saisie 1 à l'appareil 2.

Le dispositif de saisie 1 comporte essentiellement une dalle tactile entièrement transparente du type susceptible d'être placé sur les écrans d'ordinateur pour servir de clavier. Ces dalles déterminent les coordonnées X, Y du point où l'on effectue une pression avec un doigt ou avec une pointe d'un crayon.

Dans le système selon l'invention la dalle est utilisée comme moyen de saisie des points sur une carte géographique, que l'on souhaite inscrire dans la base de données géographiques de l'appareil 2 pour par exemple établir un itinéraire ou personnaliser un itinéraire déjà préétabli dans l'appareil. A cette fin on place la dalle directement sur la carte géographique. Le dispositif 1 établit les coordonnées XY de position des points excités par le doigt ou par un crayon, sur la carte, à travers la dalle, et ces coordonnées de position sont transformées par des moyens de transformation appropriés en données géographiques et inscrites dans la base de données. Bien entendu pour que ces moyens de transformation puissent fonctionner correctement, le système comporte des moyens de corrélation qui sont adaptés pour établir la corrélation entre les données de position et les données géographiques correspondantes.

Les fonctions de ces moyens qui sont connus en soi sont incorporées, dans le système selon l'invention, au logiciel de l'appareil de navigation et de positionnement 2, comme il sera décrit plus loins. Ainsi l'initialisation de la dalle tactile du dispositif de saisie 1 ainsi que la saisie des points sur la carte se fait à partir de l'appareil 2, à l'aide des moyens de commande de celui-ci, généralement le clavier et l'écran de cet appareil.

Le dispositif électronique comporte un bouton marche/arrêt pour la mise sous tension et est pourvu d'un organe indicateur tel qu'une diode électroluminescent destinée à indiquer la mise sous tension et la transmission des coordonnées de position d'un point sur la dalle. Dans le premier cas, la diode est allumée et dans le deuxième cas elle est clignotante.

On décrira ci-après le fonctionnement du système selon l'invention, après avoir placé le dispositif de saisie 1 avec sa dalle tactile transparente sur la carte sur laquelle des points doivent être saisies. Cette saisie se fait par pression à l'aide d'un doigt ou d'un crayon sur la dalle au-dessus du point à saisir de la carte. La dalle donne des coordonnées XY. Pour la transformation de ces coordonnées XY en coordonnées géographiques, telles que latitude et longitude, l'utilisateur doit initialiser la dalle en saisissant trois points remarquables de la carte, comme le lui indique le menu pointeur du logiciel de l'appareil de navigation et de positionnement. Les premier et deuxième points doivent se trouver sur la même latitude tandis que les deuxième et troisième sur la même longitude. La saisie d'un point remarquable pour l'initialisation se fait en entrant au clavier de l'appareil 2 des coordonnées géographiques dans cet appareil, puis en appuyant sur la dalle tactile à l'emplacement de ces points. A partir de ces données de position et géographiques, l'appareil de navigation et de positionnement 2 établit la corrélation entre ces deux types de données, ce qui permet ainsi à l'appareil de convertir ultérieurement les coordonnées de position de chaque point sur la dalle tactile en coordonnées géographiques.

Des données obtenues lors de la phase de l'initialisation seront mémorisées dans l'appareil 2 et pourraient être rappellées par l'utilisateur lorsqu'il souhaite à nouveau saisir des points sur cette même partie de la carte. Dans ce cas il aura juste à appuyer auparavant successivement sur sa dalle tactile aux emplacements des trois points remarquables.

Grâce à la dalle tactile, l'utilisateur peut saisir par exemple des points individuels, une route ou un profile de carte en saisissant successivement les points appropriés sur la carte.

## Revendications

1. Procédé de saisie de données dans un système de navigation et de positionnement dans une zone géographique prédéterminée, du type comprenant un appareil de navigation et de positionnement pourvu d'une base de données géographiques de lieux géographiques situés dans ladite zone géographique prédéterminée et un dispositif de saisie de points géographiques sur les cartes géographiques ou analogue, de cette zone, par un utilisateur et d'inscription des données dans ladite base comportant une dalle tactile transparente susceptible d'être posée sur la carte et adaptée pour permettre d'indiquer un point sur cette dernière à travers la dalle, des moyens d'établissement et de corrélation entre les coordonnées des points de la dalle et des données géographiques des points correspondants sur la carte et des moyens de transformation des données d'un point saisi de la dalle en données géographiques correspondantes, caractérisé en ce que l'on prévoie dans l'appareil de navigation et de positionnement un logiciel d'initialisation et d'utilisation de la dalle tactile (1) et en ce que, pour l'établissement de la corrélation entre les coordonnées des points de la dalle se trouvant sur la carte géographique et les coordonnées géographiques des points correspondants situés sur la carte, on initialise la dalle en saisissant trois points remarquables de la carte, dont les premiers et deuxième se trouvent sur la même latitude et les deuxième et troisième sur la même longitude.

2. Procédé selon la revendication 1, caractérisé en ce que la saisie d'un point remarquable pour l'initialisation se fait en inscrivant des données géographiques de ce point dans l'appareil, le cas échéant à l'aide du clavier de celui-ci, et en appuyant sur la dalle tactile à l'emplacement de ce point.

3. Procédé selon la revendication 2, caractérisé en ce qu'après l'initialisation de la dalle, on inscrit des données géographiques d'un point de la carte en appuyant sur la dalle tactile à l'emplacement de ce point.

4. Procédé selon l'une des revendications 1 à 3, caractérisé en ce que, en saisissant successivement plusieurs points, on crée une route ou on réalise un profil de carte.
